# EUROPÄISCHE PATENTANMELDUNG

(11) **EP 2 562 319 A2**
(43) Veröffentlichungstag der Anmeldung: **27.02.2013**
(21) Anmeldenummer: 12179168.5
(22) Anmeldetag: 03.08.2012
(51) Int. Cl.: E04B 1/66, B32B 27/12, B32B 27/32

(54) **Betonschutzfolie**

(30) Priorität: 22.08.2011 DE 202011051052 U; 19.06.2012 DE 102012210348
(71) Anmelder: Huesker Synthetic GmbH, 48712 Gescher (DE)
(72) Erfinder: Eßling, Jörg, 48715 Gescher (DE)
(74) Vertreter: Patentanwälte Freischem

(57) **Zusammenfassung**

Verbundmatte zur Auskleidung von Betonwänden, welche eine Textilschicht (1) mit Schlingen (2) aus synthetischem Material aufweist, wobei die Schlingen (2) aus einer ersten Oberfläche der Textilschicht (1) herausragen und wobei an der zweiten Oberfläche der Textilschicht (1) eine synthetische Schutzfolie (3) mit geschlossener Oberfläche befestigt ist.

Aufgabe des Gegenstandes ist es, die Widerstandsfähigkeit der Verbundmatte zu erhöhen indem die Schlingen mit einer Schicht (4) verbunden sind, die eine hohe Porösität und dämpfende Eigenschaften aufweist, welche die Kraftübertragung aus dem Beton auf die Schutzfolie (3) abfedert.

## Beschreibung

Die Erfindung betrifft eine Verbundmatte zur Auskleidung von Betonwänden, welche eine Textilschicht mit Schlingen aus synthetischem Material aufweist, wobei die Schlingen aus einer ersten Oberfläche der Textilschicht herausragen und wobei an der zweiten Oberfläche der Textilschicht eine synthetische Schutzfolie mit geschlossener Oberfläche befestigt ist, sowie ein Verfahren zur Herstellung einer derartigen Verbundmatte. Die Erfindung bezieht sich ferner auf ein Verfahren zur Herstellung einer derartigen Verbundmatte.

Derartige Verbundmatten werden zur Abdichtung von aus Beton gegossenen Strukturen insbesondere der Agrartechnik, z.B. Stallungen, Silos, Güllebehälter verwendet, damit Flüssigkeiten und Gase die Betonwände nicht angreifen können.

Derartige Verbundmatten sind z.B. aus der Druckschrift EP 0 288 393 A1 bekannt. Die Druckschrift DE 10 2004 015 694 B4 beschreibt eine derartige Verbundmatte, bei der eine mit schlingenförmig gelegten Polypropylendrähten oder -fäden versehene Polypropylen-Oberschicht mit einer aus Polypropylen bestehenden Unterschicht vollflächig miteinander verbunden wird, wobei die Verbindung zwischen Oberschicht und Unterschicht im Heißverbundverfahren erfolgt, wobei die noch warme zähe Folie der Unterschicht unmittelbar nach der Extrusion auf das Gewebematerial der Oberschicht aufgebracht und in das Gewebematerial eingebracht wird. Durch das Verbinden der noch nicht erhärteten Folie mit dem Gewebe besteht die Gefahr, dass durch das Eindringen des Polypropylenmaterials der Unterschicht in das Gewebe der Oberschicht und durch Verformen der Unterschicht eine inhomogene Materialstärke der Verbundmatte entsteht und dass die Festigkeit der Bindung zwischen den Schichten lokal variiert.

Aufgabe der Erfindung ist es, die Widerstandsfähigkeit der Verbundmatte zu erhöhen.

Diese Aufgabe wird dadurch gelöst, dass die Schlingen mit einer Schicht verbunden sind, welche eine hohe Porösität und dämpfende Eigenschaften aufweist und welche die Kraftübertragung aus dem Beton auf die Schutzfolie abfedert.

In einer ersten Ausführungsform kann zwischen der Textilschicht und der Schutzfolie eine Schaumschicht aus synthetischem Material angeordnet sein.

Das Zwischenfügen einer dämpfenden und porösen Schicht, insbesondere einer synthetischen Schaumschicht, zwischen die Textilschicht und die Schutzfolie bewirkt einerseits, dass die Haltbarkeit der Verklebung gesteigert wird. Insbesondere bei Wahl einer Textilschicht bestehend aus einem Bändchengewebe und einer glatten Schutzfolie besteht die Gefahr, dass der Klebstoff nicht optimal an den zwei Schichten haftet. Eine Schaumschicht hat aufgrund ihrer Gaseinschlüsse in der Regel eine höhere Porosität als die anderen beiden Schichten. Diese steigert die Haltekräfte, die ein aufgebrachter Klebstoff entwickelt.

Zudem hat die Schaumschicht eine dämpfende Eigenschaft, welche die Kraftübertragung aus dem Beton auf die Schutzfolie abfedert. Die Dämpfende Wirkung wird zusätzlich durch den Klebstoff verstärkt, der die Textilschicht mit der Schutzfolie verbindet. Die Schaumschicht reduziert folglich die Gefahr einer Beschädigung der Schutzfolie und steigert so die Widerstandsfähigkeit der Verbundmatte.

In der Praxis kann die Schaumschicht mit der Oberfläche der Textilschicht vollständig verklebt sein. Ferner kann sie mit einer Oberfläche der Schutzfolie vollständig verklebt sein. Die vollständige Verklebung führt zu einem möglichst festen Verbund der Schichten der Verbundmatte.

Ferner kann die mit der Schaumschicht verklebte Oberfläche der Schutzfolie derart behandelt sein, dass ihre Benetzbarkeit mit Klebstoff gesteigert ist. Zu diesem Zweck kann sie insbesondere einer Koronabehandlung unterzogen werden. Bei einer Koronabehandlung wird eine Kunststofffolie über eine Walze geführt, wobei oberhalb der Walze eine an einen Koronagenerator angeschlossene Elektrode angeordnet ist. Die Elektrode erzeugt eine Korona-Entladung, welche in die Oberfläche der Folie eindringt und die Benetzbarkeit der Folie steigert. Eine Vorrichtung zur Durchführung einer Koronabehandlung ist beispielsweise in der Druckschrift DE 44 18 460 C2 beschrieben.

Es sind aber auch andere Verfahren bekannt, welche zu einer Steigerung der Benetzbarkeit führen, wie zum Beispiel eine Flammbehandlung, Fluorierung oder Plasmabehandlung. Ziel aller dieser Methoden ist die Erhöhung der Polarität der Oberfläche, wodurch die Benetzbarkeit und Affinität der Oberfläche gegenüber flüssigen und pastösen Stoffen wie Klebstoff steigt.

Die Schlingen können in der Praxis aus monofilem Kunststoffgarn bestehen, das in die Textilschicht eingearbeitet ist. Insbesondere kann das monofile Kunststoffgarn in Form von Schlaufen mit der Textilschicht verbunden werden. Eine derartige Herstellungstechnik wird mit Tufting bezeichnet. Bei einem Gewebe werden die Schlingen von den Maschen umfasst durch das Gewebe geführt und an dem Gewebe arretiert. Die Schlingen können aber auch mittels der Rascheltechnik oder einer anderen geeigneten Technik mit der Textilschicht verbunden werden.

Wie zuvor erwähnt, kann die Textilschicht in der Praxis aus einem Bändchengewebe, vorzugsweise aus Polypropylen, bestehen. Die Schaumschicht kann in der Praxis aus Polyurethan oder ebenfalls aus Polypropylen bestehen. Dies haftet gut an geeigneten Klebstoffen und kann mit der erforderlichen feinen Porösität hergestellt werden.

Auch der Klebstoff zur Verbindung der Schaumschicht mit der Textilschicht und/oder der Schutzfolie kann aus Polyurethan bestehen. Dieser haftet sehr gut an einer Schaumschicht aus Polyurethan. Die Schutzfolie kann in der Praxis aus Polypropylen und Polyethylen bestehen. Es ist aber auch möglich, eine Schaumschicht aus Polypropylen zu verwenden. In diesem Fall kann ein Klebstoff vorteilhaft sein, der ebenfalls aus Polypropylen besteht.

Bei einer zweiten Ausführungsform kann die Textilschicht selbst dämpfende und poröse Eigenschaften aufweisen. Die Textilschicht kann aus einem Faservlies bestehen, welches die Schicht mit hoher Porösität und dämpfenden Eigenschaften bildet.

Die Schlingen aus synthetischem Material können unmittelbar in die dämpfende Schicht eingearbeitet und mit ihr verbunden werden, wenn die dämpfende Schicht aus einem Faservlies besteht. Somit wird ein Arbeitsschritt gespart. Die Schlingen werden in das Faservlies eingetuftet wie in der zuvor beschriebenen Ausführungsform in das Bändchengewebe. Ein zusätzlicher Verbindungsschritt zwischen der Textilschicht und der Dämpfungsschicht kann entfallen, weil die Textilschicht selbst als poröse Dämpfungsschicht wirkt.

Die Faservlies-Schicht kann mit einer Gewebeschicht verstärkt sein, die vorzugsweise eine der Oberflächen der Faservlies-Schicht abdeckt. Die Gewebeschicht kann die Auszugsfestigkeit der Schlingen aus der Faservlies-Schicht verstärken.

Die Faservlies-Schicht kann in der Praxis mit einer Oberfläche der Schutzfolie vollflächig verklebt sein. Die Verbindung mit den Schlingen entsteht durch das Tuften.

Die der Erfindung zu Grunde liegende Aufgabe kann auch mit einem Verfahren gelöst werden.

Die der Erfindung zu Grunde liegende Aufgabe kann gelöst werden durch ein Verfahren zur Herstellung einer Verbundmatte zur Auskleidung von Betonwänden, bei dem eine Textilschicht mit Schlingen aus synthetischem Material versehen wird, wobei die Schlingen aus einer ersten Oberfläche der Textilschicht herausragen, bei dem eine zweiten Oberfläche der Textilschicht mit einer synthetischen Schutzfolie mit geschlossener Oberfläche verbunden wird, dadurch gekennzeichnet, dass die Schlingen mit einer Schicht verbunden wird, welche eine hohe Porösität und dämpfende Eigenschaften aufweist und welche die Kraftübertragung aus dem Beton auf die Schutzfolie abfedert.

In einer praktischen Ausführungsform kann zwischen die Textilschicht und die Schutzfolie eine Schaumschicht aus synthetischem Material eingefügt werden, welches die Schicht mit hoher Porösität und dämpfenden Eigenschaften bildet, wobei vorzugsweise die Schlingen durch Tuften mit dem Faservlies verbunden sind.

Die Schicht mit hoher Porösität und dämpfenden Eigenschaften kann mit der Oberfläche mindestens einer angrenzenden Schicht und/oder Folie vollflächig verklebt werden. Im Falle einer Schaumschicht mit dämpfenden Eigenschaften kann diese beidseitig verklebt werden.

Durch das erfindungsgemäße Verfahren kann der Prozess mit einem sehr viel niedrigeren Anpressdruck der Walzen gefahren werden als bei der vorbekannten Beschichtung, so dass die Schlingenfäden nicht so sehr zusammengedrückt werden, was wiederum dazu führt, dass sich diese besser in den Beton verankern.

In der Praxis kann die Oberfläche der Schutzfolie vor dem Verkleben mit der Schaumschicht derart behandelt werden, dass ihre Benetzbarkeit mit Klebstoff gesteigert ist.

Insbesondere die zu verklebende Oberfläche der Schutzfolie kann mit einer Koronabehandlung behandelt werden.

Die Schlingen können aus monofilem Kunststoffgarn in die Textilschicht eingearbeitet, insbesondere eingetuftet, werden.

Ausführungsformen der Erfindung werden nachfolgend unter Bezugnahme auf die beigefügte Zeichnungen beschrieben.

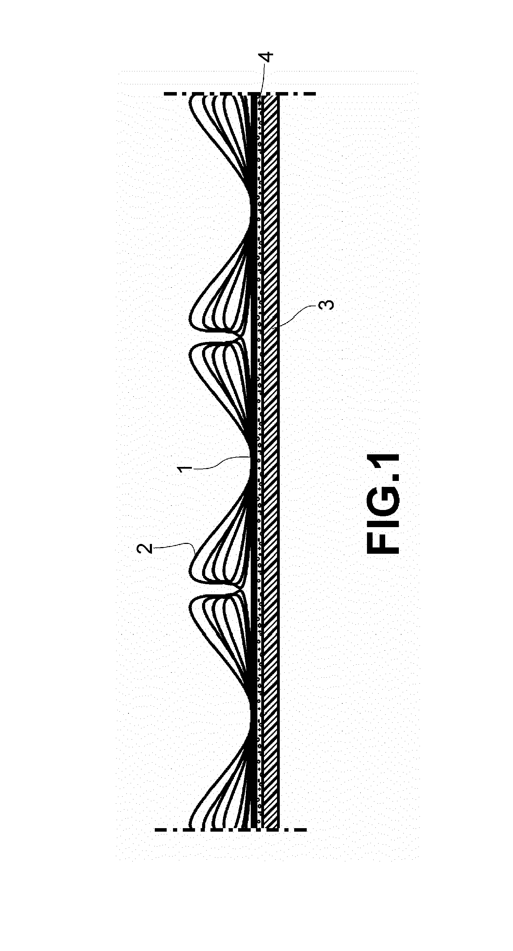

Die Fig. 1 zeigt eine vergrößerte Schnittdarstellung einer erfindungsgemäßen Verbundmatte.

Die Fig. 2 eine der Fig. 1 entsprechende Darstellung einer alternativen Ausführungsform.

Die Deckschicht bildet eine dünne Textilschicht 1, welche beispielsweise von einem Bändchengewebe gebildet wird. In die Textilschicht 1 sind Schlingen 2 eingearbeitet, welche aus der oberen Oberfläche der Textilschicht herausragen. Die Textilschicht 1 kann sehr dünn ausgebildet sein (wenige zehntel Millimeter). Die Schlingen 2 sind so auszubilden, dass sie um einige Millimeter oder Zentimeter über die Oberfläche der Textilschicht 1 herausragen. Beim Aufbringen von Beton muss der fließfähige Beton die Schlingen umfließen, sodass die Verbundmatte nach dem Abbinden des Betons über seine gesamte Oberfläche fest mit dem Betonkörper verbunden ist. Die den Schlingen 2 gegenüberliegende Oberfläche der Verbundmatte wird von einer Schutzfolie 3 aus synthetischem Material gebildet. Die Schutzfolie kann in der Praxis von einer 0,5 bis 2,5 mm starken geschlossenen Folie aus Polypropylen oder Polyethylen bestehen.

Zwischen der Schutzfolie 3 und der Textilschicht 1 ist eine Schaumschicht 4 angeordnet, die beispielsweise aus Polyurethan oder Polypropylen bestehen kann. Die Schaumschicht 4 kann ähnlich dünn wie die Textilschicht ausgebildet sein, wobei ihre Dicke im Bereich von 2 bis 3 Millimetern liegt. Bei der Herstellung der erfindungsgemäßen Verbundmatte wird auf die Oberfläche der Schutzfolie vollständig ein Kleber aufgebracht, auf den anschließend die Schaumschicht 4 aufgelegt wird. Anschließend wird auf die Schaumschicht 4 ein Kleber aufgebracht, auf dem die den Schlingen 2 gegenüberliegende Seite der Textilschicht 1 aufgelegt wird.

Als Kleber kann zum Beispiel ein Polypropylen- oder Polyurethan-Kleber verwendet werden, der eine sehr hohe Bindung zwischen den synthetischen Schichten erzeugt.

Da die Schutzfolie häufig eine geringe Benetzbarkeit und daher nur eine unzureichende Verklebbarkeit aufweist, kann diese vor dem Verkleben mit einem geeigneten Verfahren benetzbar gemacht werden. Hier bietet sich zum Beispiel eine Koronabehandlung an, welche durch in die Oberfläche der Schutzfolie 3 eindringende elektrische Entladungen diese Oberfläche benetzbar macht.

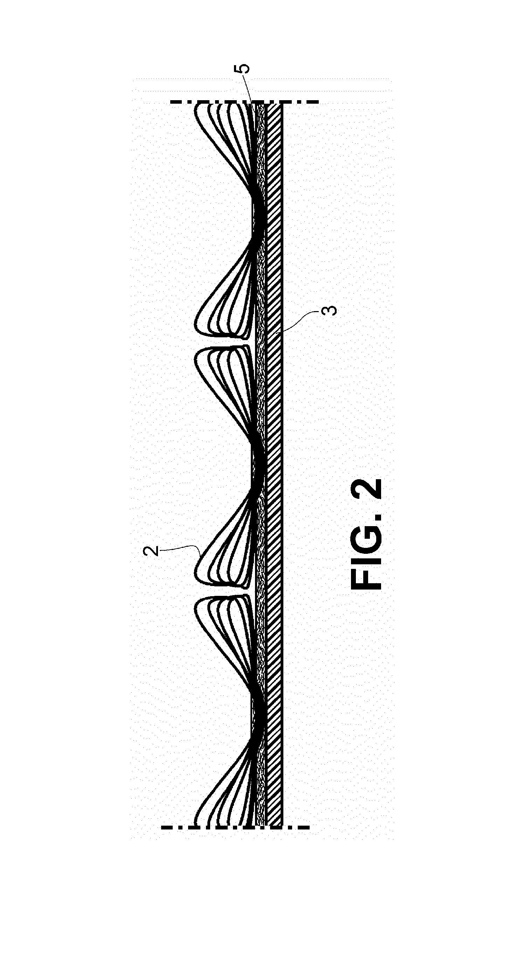

In der in Fig. 2 gezeigten Ausführungsform sind die Schlingen 2 unmittelbar in eine Schicht aus einem Faservlies 5 eingetuftet, so dass die Textilschicht selbst die dämpfende Schicht bildet, welche die Schlingen 2 mit der Schutzfolie verbindet. Das Faservlies 5 ist hinreichend porös, um unmittelbar mit einem Kleber, z.B. einem Polypropylen- oder Polyurethan-Kleber auf der Schutzfolie 3 aufgeklebt zu werden. Dabei werden die in das Faservlies 5 eingetufteten Schlingen 2 fest mit der Schutzfolie 3 verbunden. In der Praxis kann das Faservlies 5 durch eine Gewebeschicht (nicht dargestellt) verstärkt sein. Die Gewebeschichtkann auf einer Seite des Faservlieses angeordnet sein. Das Herstellungsverfahren unter Verwendung eines Faservlieses ist noch einfacher als das Herstellungsverfahren mit dem Bändchengewebe. Es entfällt eine separate Dämpfungsschicht und es ist nur ein Klebevorgang nötig, um das Produkt fertigzustellen.

### Bezugszeichenliste

- 1: Textilschicht
- 2: Schlingen
- 3: Schutzfolie
- 4: Schaumschicht
- 5: Faservlies-Schicht

## Patentansprüche

1. Verbundmatte zur Auskleidung von Betonwänden, welche eine Textilschicht (1,5) mit Schlingen (2) aus synthetischem Material aufweist, wobei die Schlingen (2) aus einer ersten Oberfläche der Textilschicht (1,5) herausragen und wobei an der zweiten Oberfläche der Textilschicht (1,5) eine synthetische Schutzfolie (3) mit geschlossener Oberfläche befestigt ist, **dadurch gekennzeichnet, dass** die Schlingen (2) mit einer Schicht (4,5) verbunden sind, welche eine hohe Porösität und dämpfende Eigenschaften aufweist und welche die Kraftübertragung aus dem Beton auf die Schutzfolie abfedert.

2. Verbundmatte nach Anspruch 1, **dadurch gekennzeichnet, dass** zwischen der Textilschicht (1) und der Schutzfolie (3) eine Schaumschicht (4) aus synthetischem Material angeordnet ist, welche die Schicht mit hoher Porösität und dämpfenden Eigenschaften bildet.

3. Verbundmatte nach Anspruch 2, **dadurch gekennzeichnet, dass** die Schaumschicht (4) mit der Oberfläche der Textilschicht (1) vollflächig verklebt ist.

4. Verbundmatte nach Anspruch 2 oder 3, **dadurch gekennzeichnet, dass** die Schaumschicht (4) mit einer Oberfläche der Schutzfolie (3) vollflächig verklebt ist.

5. Verbundmatte nach Anspruch 4, **dadurch gekennzeichnet, dass** die mit der Schaumschicht (4) verklebte Oberfläche der Schutzfolie (3) derart behandelt ist, dass ihre Benetzbarkeit mit Klebstoff gesteigert ist.

6. Verbundmatte nach Anspruch 5, **dadurch gekennzeichnet, dass** die mit der Schaumschicht (4) verklebte Oberfläche der Schutzfolie (3) mit einer Koronabehandlung behandelt ist.

7. Verbundmatte nach einem der vorangehenden Ansprüche, **dadurch gekennzeichnet, dass** die Schlingen (2) aus monofilem Kunststoffgarn gebildet sind, das in die Textilschicht (1) eingearbeitet ist.

8. Verbundmatte nach einem der vorangehenden Ansprüche 2 bis 7, **dadurch gekennzeichnet, dass** sie mindestens eines der folgenden Merkmale aufweist:
● die Textilschicht (1) besteht aus einem Bändchengewebe;
● die Textilschicht (1) besteht aus Polypropylen;
● die Schaumschicht (4) besteht aus Polypropylen oder Polyurethan;
● die Schaumschicht (4) ist mit der Textilschicht (1) und/oder mit der Schutzfolie (3) mit einem Polypropylen- oder Polyurethan-Kleber verklebt;
● die Schutzfolie (3) besteht aus Polypropylen oder Polyethylen.

9. Verbundmatte nach Anspruch 1, **dadurch gekennzeichnet, dass** die Textilschicht aus einem Faservlies (5) besteht, welches die Schicht mit hoher Porösität und dämpfenden Eigenschaften bildet.

10. Verbundmatte nach Anspruch 9, **dadurch gekennzeichnet, dass** die Schlingen (2) in die Faservlies-Schicht (5) eingetuftet sind.

11. Verbundmatte nach Anspruch 9 oder 10, **dadurch gekennzeichnet, dass** die Faservlies-Schicht (5) mit einer Oberfläche der Schutzfolie (3) vollflächig verklebt ist.

12. Verfahren zur Herstellung einer Verbundmatte zur Auskleidung von Betonwänden, bei dem eine Textilschicht (1,5) mit Schlingen (2) aus synthetischem Material versehen wird, wobei die Schlingen (2) aus einer ersten Oberfläche der Textilschicht (1,5) herausragen, bei dem eine zweiten Oberfläche der Textilschicht (1,5) mit einer synthetischen Schutzfolie (3) mit geschlossener Oberfläche verbunden wird, **dadurch gekennzeichnet, dass** die Schlingen (2) mit einer Schicht (4,5) verbunden sind, welche eine hohe Porösität und dämpfende Eigenschaften aufweist und welche die Kraftübertragung aus dem Beton auf die Schutzfolie (3) abfedert.

13. Verfahren nach Anspruch 12, **dadurch gekennzeichnet, dass** zwischen der Textilschicht (1) und der Schutzfolie (3) eine Schaumschicht (4) aus synthetischem Material angeordnet wird, welche die Schicht mit hoher Porösität und dämpfenden Eigenschaften bildet.

14. Verfahren nach Anspruch 12, **dadurch gekennzeichnet, dass** als Textilschicht ein Faservlies (5) verwendet wird, welches die Schicht mit hoher Porösität und dämpfenden Eigenschaften bildet, wobei vorzugsweise die Schlingen (2) durch Tuften mit dem Faservlies (5) verbunden sind.

15. Verfahren nach Anspruch 12, 13 oder 14, **dadurch gekennzeichnet, dass** die Schicht mit hoher Porösität und dämpfenden Eigenschaften mit der Oberfläche mindestens einer angrenzenden Schicht (4) und/oder Folie (3) vollflächig verklebt wird.
